# EUROPÄISCHE PATENTSCHRIFT

(11) **EP 1 339 995 B1**
(45) Veröffentlichungstag und Bekanntmachung des Hinweises auf die Patenterteilung: **08.01.2014**
(21) Anmeldenummer: 01999760.0
(22) Anmeldetag: 08.11.2001
(51) Int. Cl.: F16D 21/06, F16D 13/64

(54) **DOPPEL-ODER MEHRFACH-LAMELLEN-KUPPLUNGSEINRICHTUNG UND LAMELLENARNORDNUNG HIERFÜR**
DOUBLE OR MULTIPLE DISK COUPLING DEVICE AND DISK ARRANGEMENT THEREFOR
SYSTEME D'EMBRAYAGE A DOUBLE DISQUE OU A DISQUES MULTIPLES ET DISPOSITIF DE DISQUES ASSOCIE

(30) Priorität: 07.12.2000 DE 10060883; 08.03.2001 DE 10111203
(43) Veröffentlichungstag der Anmeldung: 03.09.2003
(73) Patentinhaber: ZF Friedrichshafen AG, 80846 Friedrichshafen (DE); Volkswagen Aktiengesellschaft, 38440 Wolfsburg (DE)
(72) Erfinder: GROSSPIETSCH, Wolfgang, 97422 Schweinfurt (DE); KUNDERMANN, Wolfgang, D-97422 Schweinfurt (DE); STAMPF, Volker, 97422 Schweinfurt (DE); EBERT, Angelika, 97421 Schweinfurt (DE); REISSER, Wolfgang, 97526 Sennfeld (DE)
(86) Internationale Anmeldenummer: PCT/EP2001/012886
(87) Internationale Veröffentlichungsnummer: WO 2002/046632

(56) Entgegenhaltungen:
- EP-A- 0 848 179
- EP-B1- 0 758 434
- DE-A- 3 712 898
- DE-A- 10 004 195
- DE-A1- 10 004 286

## Beschreibung

### [Technisches Gebiet]

Die Erfindung betrifft eine Doppel- oder Mehrfach-Lamellen-Kupplungseinrichtung für die Anordnung in einem Antriebsstrang eines Kraftfahrzeugs zwischen einer Antriebseinheit und einem Getriebe, wobei die Kupplungseinrichtung eine Mehrzahl von radial gestaffelt angeordneten, jeweils einer Getriebeeingangswelle des Getriebes zugeordnete Lamellen-Kupplungsanordnungen aufweist, die jeweils mit einem Lamellenpaket ausgeführt sind, welches einem Außenlamellenträger zugeordnete Außenlamellen und mit diesen in gegenseitigen Mitnahmeeingriff bringbare, einem Innenlamellenträger zugeordnete Innenlamellen aufweist, wobei jedes Lamellenpaket belagaufweisende und belaglose Lamellen, aufweist, die entweder als Außenlamellen oder als Innenlamellen ausgeführt sind.

### [Stand der Technik]

Derartige Kupplungseinrichtungen sind in Patentanmeldungen der Anmelderin offenbart, es wird insbesondere auf die deutschen Patentanmeldungen 19955356.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen. Ferner in diesem Zusammenhang auf eine aus der EP 0 758 434 B1 bekannte Kupplungseinrichtung verwiesen.

Bei derartigen Lamellen-Kupplungseinrichtungen handelt es sich in der Regel um nasslaufende Kupplungseinrichtungen. Derartige Kupplungseinrichtungen weisen in der Regel genutete Belaglamellen und belaglose Gegenlamellen auf, die z. B. aus Stahl gefertigt sind. Die Einleitung der Momente in das Lamellenpaket erfolgt z. B. über das Profil eines Außenlamellenträgers in die Außenlamellen, wird in der jeweiligen Kupplungsanordnung auf die Innenlamellen übergeben und von dort dem Innenlamellenträger zugeleitet, wenn man vom normalen Kraftfluss von der Antriebseinheit zum Getriebe ausgeht. Man kann die Kupplungseinrichtung alternativ aber auch so auslegen, dass für diesen Standard-Betriebszustand das Moment von innen nach außen geleitet wird.

Bei den in den angegebenen deutschen Patentanmeldungen offenbarten Konstruktionen einer Nasslauf-Doppelkupplung sind die Belaglamellen einer radial äußeren Kupplungsanordnung (kurz Außenkupplung) dem Außenlamellenträger zugeordnet, und die axial das Lamellenpaket begrenzenden Endlamellen dieser "Außenkupplung" sind von Außenlamellen gebildet, die dementsprechend nur einseitig mit Belag ausgeführt sind. Ein Vorteil dieser Anordnung liegt darin, dass die Belaglamellen mit ihren Nuten der Eingangsseite der Kupplungseinrichtung zugehörig sind, also von der Antriebseinheit unmittelbar angetrieben werden, so dass bei stehender Getriebeeingangswelle und rotierender Antriebseinheit (Motor) und damit rotierendem Außenlamellenträger eine Förderwirkung auf Kühlfluid, insbesondere Kühlöl, ausüben, die vor allem auf Fliehkraftwirkung beruht und die Kühlung der Kupplungsanordnung unterstützt. Für die Lamellen der radial innen liegenden Kupplungsanordnung (kurz Innenkupplung) wurde hingegen eine andere Zuordnung gewählt, bei der die der Eingangsseite zugehörigen Außenlamellen als belaglose und die der Ausgangsseite zugehörigen Innenlamellen als belagtragende Lamellen ausgeführt sind.

Es hat sich nun gezeigt, dass die der Konstruktion dieser Patentanmeldungen zugrundeliegenden Überlegungen zwar nicht revidiert werden müssen, dass aber auch ohne derartige Zuordnung der Außenlamellen und Innenlamellen für die radial äußere Kupplungsanordnung trotzdem eine hohe Standfestigkeit der Kupplungsanordnung erreicht wird. Es hat sich also gezeigt, dass auch ohne antriebsseitig angekoppelte Belaglamellen eine hinreichende Kühlwirkung im Lamellenpaket erreicht wird, so dass zumindest für normale Dauerlast- und Spitzenlast-Anforderungen keine Gefahr des "Verbrennens" der Kupplungsanordnung besteht.

### [Aufgabe der Erfindung]

Vor diesem Hintergrund haben die Erfinder der vorliegenden Anmeldung erkannt, dass es durchaus auch vorteilhaft sein kann, wenn sowohl die belagaufweisenden Lamellen wenigstens einer radial inneren Lamellenkupplungsanordnung als auch die belagaufweisenden Lamellen wenigstens einer radial äußeren Lamellen-Kupplungsanordnung beide als Außenlamellen oder - vorzugsweise - als Innenlamellen ausgeführt sind. Die belagaufweisenden Lamellen können mit Belagtragelementen und auf einer Seite oder - vorzugsweise - auf beiden Seiten daran angebrachten Belegen ausgeführt sein.

### [Darstellung der Erfindung]

Eine derartige, für die radial innere und die radial äußere Lamellen-Kupplungsanordnung identische Zuordnung der belagaufweisenden und entsprechend der belaglosen Lamellen zum Außenlamellenträger (als Außenlamellen) bzw. zum Innenlamellenträger (als Innenlamellen) kann verschiedene Vorteile bringen. Insbesondere dann, wenn das Lamellenpaket der radial äußeren Kupplungsanordnung einen Innendurchmesser aufweist, der größer als ein Außendurchmesser des Lamellenpakets der radial inneren Kupplungsanordnung ist, und wenigstens eine der folgenden Bedingungen
- wenigstens eine, vorzugsweise mehrere der belaglosen Lamellen der radial inneren Kupplungsanordnung und wenigstens eine, vorzugsweise mehrere der belaglosen Lamellen der radial äußeren Kupplungsanordnung weisen die gleiche axiale Dicke auf und sind aus dem gleichen Materialstück gefertigt;
- wenigstens eines, vorzugsweise mehrere der Belagtragelemente der radial inneren Kupplungsanordnung und wenigstens eines, vorzugsweise mehrere der Belagtragelemente der radial äußeren Kupplungsanordnung weisen die gleiche axiale Dicke auf und sind aus dem gleichen Materialstück gefertigt;
- wenigstens ein, vorzugsweise mehrere der Beläge der radial inneren Kupplungsanordnung und wenigstens ein, vorzugsweise mehrere der Beläge der radial äußeren Kupplungsanordnung weisen die gleiche axiale Dicke auf und sind aus dem gleichen Materialstück gefertigt,
erfüllt ist, kann bei der Herstellung Material dadurch eingespart werden, dass die Außenlamellen bzw. Innenlamellen des radial inneren Lamellenpakets gewissermaßen aus dem Verschnitt der Außenlamellen bzw. Innenlamellen des radial äußeren Lamellenpakets gefertigt werden, und umgekehrt.

Vorzugsweise sind alle belagaufweisenden Lamellen auf beiden Seiten mit Belag ausgeführt, so dass die bei den Kupplungskonstruktionen der angesprochenen Patentanmeldungen der Anmelderin vorgesehenen, einseitig mit Belag ausgeführten Endlamellen entfallen. Hieraus ergeben sich Kostenvorteile. Ferner kann die Kupplungseinrichtung axial kürzer bauend ausgeführt werden. In der Regel werden die belagaufweisenden Lamellen mit Belagnuten ausgeführt sein.

Besonders bevorzugt ist, dass von den Lamellen wenigstens eines, vorzugsweise aller Lamellenpakete die einer Eingangsseite der Kupplungseinrichtung zugehörigen Lamellen, die an einer Abtriebswelle der Antriebseinheit angekoppelt oder ankoppelbar sind, insgesamt ein größeres Massenträgheitsmoment aufweisen als die einer Ausgangsseite der Kupplungseinrichtung zugehörigen Lamellen, die an der jeweiligen Getriebeeingangswelle angekoppelt oder ankoppelbar sind. Hierdurch wird erreicht, dass getriebeseitig eine kleinere, die Getriebesynchronisation entlastende Trägheitsmasse wirksamer ist als antriebseinheitsseitig. Eine vergleichsweise große, eingangsseitige Trägheitsmasse ist sogar erwünscht, da diese im Falle der Anordnung eines Zwei-Massen-Schwungrads oder eines Torsionsschwingungsdämpfers zwischen der Antriebseinheit und der Kupplungseinrichtung als deren Funktion vorteilhaft unterstützende Sekundärmasse wirkt. Vorzugsweise sind die Außenlamellen des jeweiligen Lamellenpakets der Eingangsseite und die Innenlamellen des jeweiligen Lamellenpakets der Ausgangsseite zugehörig.

Nach einem anderen Aspekt stellt die Erfindung ein Verfahren zur Herstellung einer erfindungsgemäßen Kupplungseinrichtung bereit, wobei die Lamellenanordnung umfasst:
- wenigstens eine, vorzugsweise mehrere belaglose erste Lamellen, die einer ersten, radial äußeren Lamellen-Kupplungsanordnung zugeordnet sind, und wenigstens eine, vorzugsweise mehrere belaglose zweite Lamellen, die einer zweiten, radial inneren Lamellen-Kupplungsanordnung zugeordnet sind, oder/und
- wenigstens ein, vorzugsweise mehrere erste Belagtragelemente, die einer/der ersten, radial äußeren Lamellen-Kupplungsanordnung zugeordnet sind, und wenigstens ein, vorzugsweise mehrere zweite Belagtragelemente, die einer/der zweiten, radial inneren Lamellen-Kupplungsanordnung zugeordnet sind, oder/und
- wenigstens ein, vorzugsweise mehrere erste Beläge, die einer/der ersten, radial äußeren Lamellen-Kupplungsanordnung zugeordnet und gegebenenfalls auf den ersten Belagtragelementen angebracht sind, und wenigstens ein, vorzugsweise mehrere zweite Beläge, die einer/der zweiten, radial inneren Lamellen-Kupplungsanordnung zugeordnete sind,
wobei das Verfahren den Schritt des Bereitstellens von Material umfasst, aus dem die Lamellen bzw. die Belagtragelemente bzw. die Beläge geschnitten werden. Erfindungsgemäß wird vorgeschlagen, dass das Verfahren wenigstens einen der folgenden Schritte umfasst:
- wenigstens ein für die Bereitstellung einer ersten Lamelle vorgesehener erster Materialstückabschnitt und wenigstens ein für die Bereitstellung einer zweiten Lamelle vorgesehener zweiter Materialstückabschnitt werden in einem Schneidevorgang oder mehreren Schneidevorgängen aus einem gemeinsamen Materialstück geschnitten, wobei im Materialstück der erste Materialstückabschnitt den zweiten Materialstückabschnitt bezogen auf einen innerhalb der Materialstückabschnitte liegenden Bezugspunkt radial außen umgibt;

In weiterer Ausgestaltung ist vorgesehen, dass
- wenigstens ein für die Bereitstellung eines ersten Belagtragelements vorgesehener erster Materialstückabschnitt und wenigstens ein für die Bereitstellung eines zweiten Belagtragelements vorgesehener zweiter Materialstückabschnitt werden in einem Schneidevorgang oder mehreren Schneidevorgängen aus einem gemeinsamen Materialstück geschnitten, wobei im Materialstück der erste Materialstückabschnitt den zweiten Materialstückabschnitt bezogen auf einen innerhalb der Materialstückabschnitte liegenden Bezugspunkt radial außen umgibt;
- wenigstens ein für die Bereitstellung eines ersten Belags vorgesehener erster Materialstückabschnitt und wenigstens ein für die Bereitstellung eines zweiten Belags vorgesehener zweiter Materialstückabschnitt werden in einem oder mehreren Schneidevorgängen aus einem gemeinsamen Materialstück geschnitten, wobei im Materialstück der erste Materialstückabschnitt den zweiten Materialstückabschnitt bezogen auf einen innerhalb der Materialstückabschnitte liegenden Bezugspunkt radial außen umgibt.

Die Erfindung wird im Folgenden anhand von in den Figuren gezeigten Ausführungsbeispielen näher erläutert.
- Fig. 1: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen, die eine Ausführungsvariante einer der in den eingangs genannten deutschen Patentanmeldungen offenbarten Doppelkupplungskonstruktionen der Anmelderin entspricht, auf deren Grundlage ein hier vorgestelltes Lagerkonzept und ein hier vorgestelltes Dichtungskonzept entwickelt wurde.
- Fig. 2: zeigt eine im Wesentlichen der Doppelkupplung der Fig. 1 entsprechende Doppelkupplung, wobei in Fig. 2 nur Komponenten mit Bezugszeichen versehen sind, die im Zusammenhang mit dem hier vorgestellten Lagerkonzept und dem hier vorgestellten Dichtungskonzept von Interesse sind.
- Fig. 3: zeigt eine erfindungsgemäße Doppelkupplung, bei der das hier vorgestellte Lagerkonzept und das hier vorgestellte Dichtungskonzept realisiert sind.
- Fig. 4: zeigt in Teilfiguren 4a, 4b und 4c eine gemäß dem Lagerkonzept verwendete Lagerscheibe.
- Fig. 5: zeigt in den Teilfiguren 5a und 5b eine gemäß dem Lagerkonzept verwendete Bundbuchse.
- Fig. 6: zeigt in den Teilfiguren 6a und 6b eine gemäß dem Lagerkonzept verwendete weitere Bundbuchse.
- Fig. 7: zeigt in den Teilfiguren 7a und 7b eine Lagerhülse.
- Fig. 8: zeigt in den Teilfiguren 8a, 8b und 8c ein hülsenartiges Ringteil, unter dessen Vermittlung die Kupplungsanordnungen der Doppelkupplungen gemäß Fig. 1 bis 3 an den Getriebeeingangswellen gelagert sind.

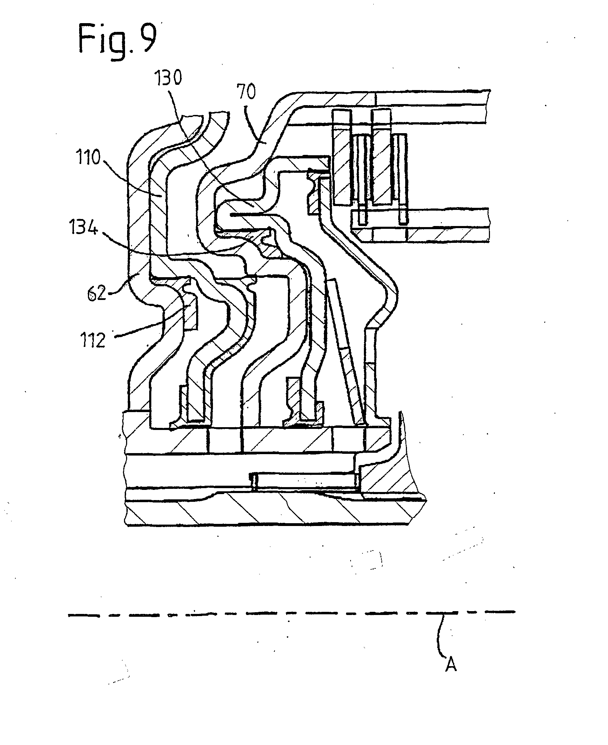

- Fig. 9: zeigt eine Detailvergrößerung der Fig. 2 im Bereich der Betätigungskolben und Druckkammern.
- Fig. 10: zeigt Detailvergrößerung der Fig. 3 im Bereich der Betätigungskolben und der Druckkammern zur Veranschaulichung des hier vorgestellten, die Abdichtung der Druckkammern betreffenden Dichtungskonzepts.
- Fig. 11: zeigt in einer der Fig. 10 entsprechenden Darstellung zwischen den Außenlamellenträgern und den Betätigungskolben wirksame Dichtungen nach dem Dichtungskonzept gemäß einer Ausführungsvariante.
- Fig. 12: zeigt in einer geschnittenen Darstellung einen Dichtungselementhalter samt aufvulkanisiertem Dichtungselement für die Abdichtung der Druckkammer der radial inneren Kupplungsanordnung gemäß der in Fig. 11 gezeigten Ausführungsvariante.
- Fig. 13: zeigt in einer geschnittenen Darstellung einen Außenlamellenträger einer dem Ausführungsbeispiel der Fig. 3 entsprechenden Doppelkupplung.
- Fig. 14: zeigt in einer geschnittenen Darstellung einen Innenlamellenträger einer dem Ausführungsbeispiel der Fig. 3 entsprechenden Doppelkupplung.

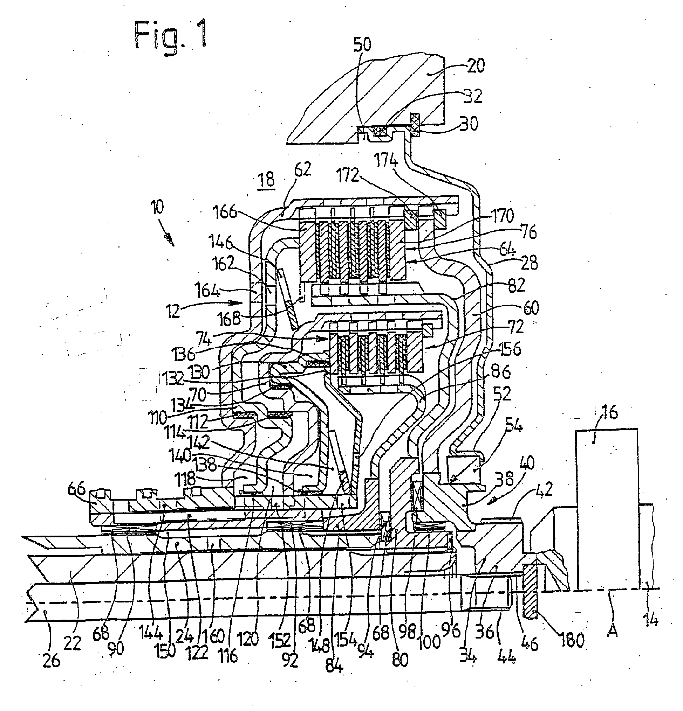

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, gegebenenfalls Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe (etwa die Ölpumpe 220) dient, wie noch näher erläutert wird. Ist wenigstens eine elektromotorisch angetriebene Ölpumpe vorgesehen, kann auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 1 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 1 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 1 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung oder dergleichen ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten beziehungsweise zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 98 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag oder dergleichen oder einem gesonderten Sprengring oder dergleichen in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 1 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einem zugeordneten hydraulischen Geberzylinder, etwa dem Geberzylinder 230, in Verbindung, wobei der Druckmediumskanal 122 über eine das Ringteil 66 aufnehmende, gegebenenfalls getriebefeste Anschlusshülse an dem Geberzylinder angeschlossen ist. Die Anschlusshülse und das Ringteil 66 bilden eine Drehverbindung. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 1 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einem zugeordneten Geberzylinder, etwa dem Geberzylinder 236, angeschlossen. Mittels den Geberzylindern kann an den beiden Druckkammern 118 und 140 wahlweise (gegebenenfalls auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von Seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man gegebenenfalls einen Volumenausgleich zur Aufnahme von im Zuge einer Betätigung der Betätigungskolben verdrängtem Druckausgleichsmedium vorsehen könnte. Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das gegebenenfalls von der Pumpe 220 bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten oder dergleichen dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets beziehungsweise durch Belagnuten oder dergleichen dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Weitere Einzelheiten der Doppelkupplung 12 gemäß dem beschriebenen Ausführungsbeispiel sind für den Fachmann ohne weiteres aus Fig. 1 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Betreffend weitere Einzelheiten und vorteilhafte Ausgestaltungen der Doppelkupplung 12 wird auf die deutschen Patentanmeldungen 199 55 365.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen, deren Offenbarung in den Offenbarungsgehalt der vorliegenden Anmeldung einbezogen wird. Es wird hierzu darauf hingewiesen, dass Fig. 1 der vorliegenden Anmeldung der Fig. 1 dieser Anmeldungsserie entspricht.

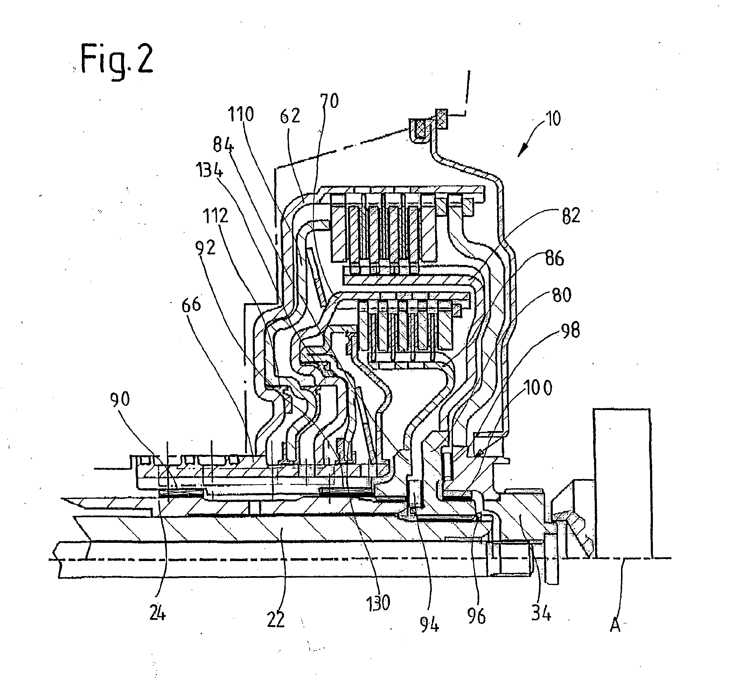

Die anhand von Fig. 1 erläuterte Doppelkupplung soll hinsichtlich der Lagerung an den Getriebeeingangswellen auf Grundlage von Fig. 2 noch detaillierter erläutert werden. Die Doppelkupplung 10 der Fig. 2 entspricht im Wesentlichen der Doppelkupplung der Fig. 1; geringfügige, aus einem Vergleich der Figuren ersichtliche Abweichungen sind hier ohne Relevanz.

Die Kupplung 10 stützt sich mit den Radiallagern 90 und 92 auf der radial äußeren Getriebeeingangswelle 24 ab. Zusätzlich ist die Eingangsnabe 34 über das Radiallager 100 auf der Nabe 80 des Innenlamellenträgers 82 gelagert und stützt sich über diese auf der inneren Getriebeeingangswelle 22 ab. Die Radiallager 90, 92 und 100 sind jeweils außen eingepresst, und die Lagerung erfolgt am Innendurchmesser zu dem jeweils benachbarten Bauteil (24 bzw. 80) hin.

Axial ist die Doppelkupplung 10 über die Nabe 80 des Innenlamellenträgers 82 einerseits an der Stirnseite der radial äußeren Getriebeeingangswelle 24 und andererseits am in die radial innere Getriebeeingangswelle 22 eingesetzten Sprengring 96 abgestützt. Je nach Toleranzlage kann zwischen der Nabe 80 und dem Sprengring 96 noch wenigstens eine Ausgleichsscheibe eingesetzt sein. Die axiale Abstützung/Lagerung zwischen den mit unterschiedlichen Drehzahlen laufenden Getriebeeingangswellen 22 und 24 erfolgt unter Vermittlung des Axiallagers 94. Weiterhin sind über das Axiallager 98 die Nabe 80 und die Eingangsnabe 34 aneinander axial abgestützt. Das auch als Kupplungsnabe bezeichenbare Ringteil 66 stützt sich über die Stirnseite des auch eine Axialabstützungsfunktion erfüllenden Radiallagers 92 an der Nabe 84 des Innenlamellenträgers axial 86 ab.

Bei der gezeigten Bauart ist vorgesehen, dass das Axiallager 94 mit der Drehzahl der Nabe 80 rotiert und somit auf der Getriebeeingangswelle 24 gleitet. Bei lockerem Sitz auf der Nabe 80 kann die Gleitbewegung auch zwischen dem Axiallager 94 und der Nabe 80 erfolgen. Eine derartige Lockerung kann beispielsweise dann auftreten, wenn das Axiallager 94 durch Verpressung an der Nabe 80 festgelegt wurde, diese Festlegung infolge eine Wärmeausdehnung aber gelockert wurde. Im Falle eines "schwimmenden" Axiallagers kann auch ein beidseitiges Gleiten auftreten.

Die als Anlagefläche dienende Stirnseite der radial äußeren Getriebeeingangswelle 24 ist relativ klein, insbesondere wenn - wie beim gezeigten Ausführungsbeispiel - hier eine Fase vorgesehen ist. Wenn das Axiallager 94 auf der Nabe 80 verpresst ist, gleitet es auf dieser sehr kleinen Stirnfläche. Neben der Belastung dieser Lagerstelle durch das Gleiten kann eine weitere Belastung dadurch erfolgen, dass es zu Axialstößen auf die Lagerstelle kommt, die insbesondere bei Momentenwechseln infolge von schräg verzahnten Zahnrädern und hierdurch induzierten Axialbewegungen der Wellen auftreten können.

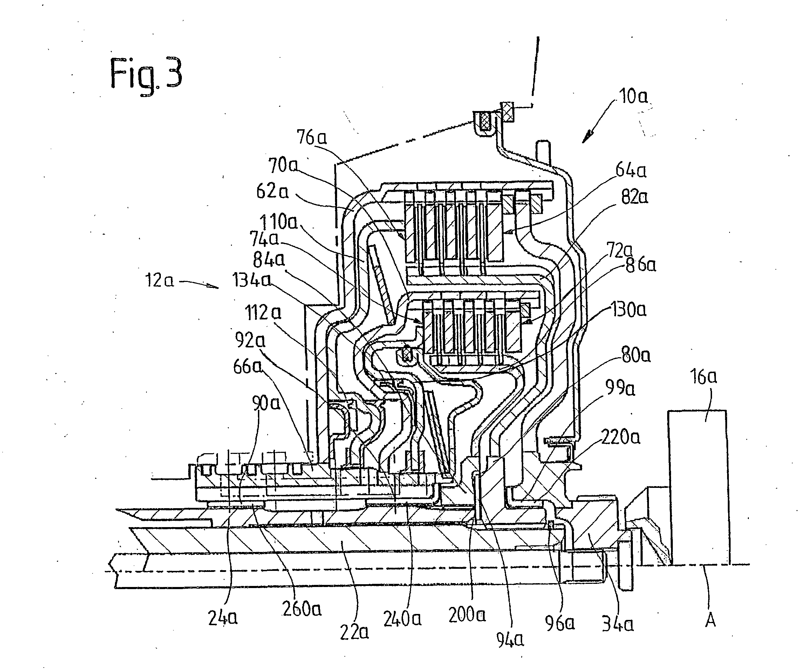

Im Hinblick auf eine möglichst hohe Dauerfestigkeit der verschiedenen Lagerstellen ist bei der Doppelkupplung 10a der Fig. 3 ein modifiziertes Lagerkonzept realisiert, das im Folgenden anhand der Fig. 3 näher erläutert wird. Es werden nur die Unterschiede gegenüber den Ausführungsbeispielen gemäß Fig. 1 und 2 erläutert und Bezugszeichen verwendet, die sich aus den Bezugszeichen der Fig. 1 und 2 durch Nachstellen des kleinen Buchstabens "a" ergeben, sofern bei den Beispielen der Fig. 1 und 2 eine entsprechende Komponente vorhanden ist.

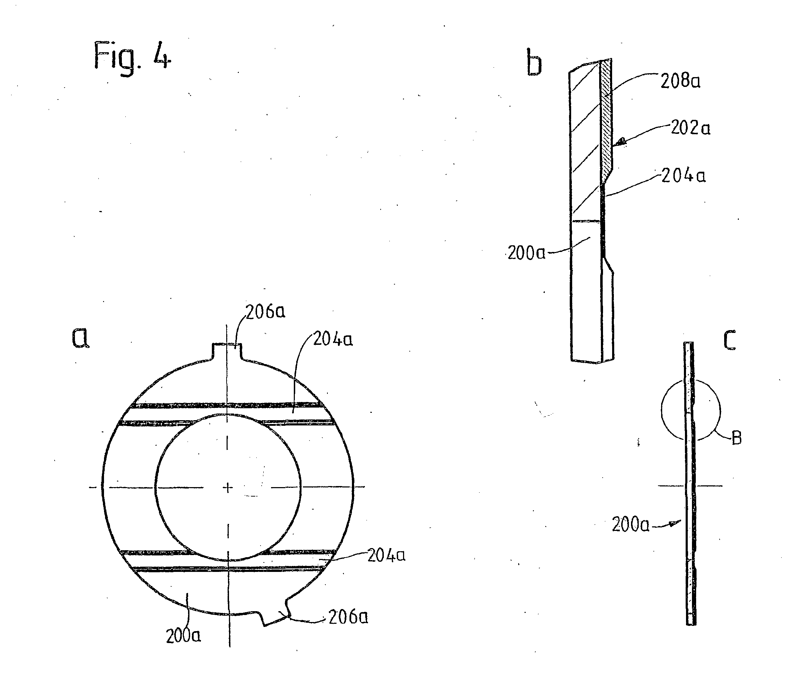

Das Axiallager 94a zwischen der Nabe 80a einerseits und der Nabe 84a und der Endfläche der radial äußeren Getriebeeingangswelle 24a andererseits weist eine in Fig. 4 im Detail gezeigte Lagerscheibe 200a auf, die mit der Getriebeeingangswelle 24a zur gemeinsamen Drehung verbunden ist. Genauer: Die Lagerscheibe ist an der Nabe 84a axial und gegen Verdrehung festgelegt, wobei die Verdrehsicherung durch ein gegenseitiges Mitnahmeprofil gewährleistet sein kann. Durch diese Verdrehsicherung gegenüber der Nabe 84a und damit gegenüber der radial äußeren Getriebeeingangswelle 24a wird die Axialabstützung des Axiallagers 94a zur Stirnseite der Getriebeeingangswelle 24a hin zu einer rein statischen Abstützung verändert, die also keinen Beanspruchungen durch durch Relativverdrehung bedingter Reibung ausgesetzt ist. Die Gleitfläche 202a des Axiallagers 94a, genauer der Lagerscheibe 200a, ist zur Nabe 80a des Innenlamellenträgers 82a hin ausgerichtet. Diese Nabe kann eine wesentlich größere Gegen-Gleitfläche bereitstellen, so dass die aneinander gleitenden Flächenabschnitte deutlich größer sein können und dementsprechend eine deutlich geringere Belastung des Axiallagers erreicht werden kann. Zur Unterstützung des Gleitens durch Schmierwirkung von Kühlöl kann die Gleitfläche mit eingeprägten Nuten 204a ausgeführt sein.

Das Axiallager 94a, genauer die Lagerscheibe 200a, ist bevorzugt mit einem eine Lagerfläche 203a bildenden Stahlrücken (zur Nabe 84a und Stirnfläche der Getriebeeingangswelle 24a hin) und einer Gleitschicht 208a auf der Vorderseite (zur Nabe 80a hin) aufgebaut. Die erwähnten Stoßbelastungen zur kleinen Stirnfläche der Getriebeeingangswelle 24a hin können deshalb statisch vom Stahlrücken abgestützt werden. Falls erforderlich, kann der Stahlrücken zur Verbesserung der Stoßbelastbarkeit hart ausgeführt sein. Für die Gleitschicht können übliche Materialien, beispielsweise Bronze, Aluminium, Polyetraflouroethylen (Teflon) und Graphit, verwendet werden.

Die Oberflächenqualität der Auflagefläche der Lagerscheibe 200a zur Nabe 84a hin kann vergleichsweise anspruchslos ausgeführt sein. Demgegenüber sollte die Anlauffläche (Gegen-Gleitfläche) der Nabe 80a eine vergleichsweise gute Oberflächenqualität aufweisen. Es kann zweckmäßig sein, diese Anlauffläche gehärtet auszuführen, je nach verwendetem Lagerwerkstoff des Axiallagers 94a.

Die Verdrehsicherung der Lagerscheibe 200a an der Nabe 84a kann formschlüssig ausgeführt sein, beispielsweise durch Unregelmäßigkeiten im Außendurchmesser der Lagerscheibe 200a (vgl. Fig. 4a). Beispielsweise können Nuten, Nocken oder Abflachungen am Außendurchmesser vorgesehen sein. Im Falle des Lagerrings 200a der Fig. 4 sind Mitnahmenocken 206a vorgesehen. In Abweichung von Fig. 4a kann man eine der beiden Nocken 206a in Umfangsrichtung breiter ausführen oder wenigstens eine weitere, unsymmetrisch angeordnete Nocke vorsehen, um den ordnungsgemäßen Einbau der Scheibe 200a (Gleitfläche 202a weist nach vorne in Richtung zur Nabe 80a hin) zu gewährleisten. Die Nabe 84a kann dann mit einer entsprechenden Gegenkontur versehen sein, die beispielsweise durch Kaltformen hergestellt sein kann. Die Fixierung des Lagerrings 200a an der Nabe 84a kann ebenfalls formschlüssig, beispielsweise durch Verstemmen, erfolgen. Alternativ können sowohl die Fixierung als auch Verdrehsicherung stoffschlüssig erfolgen, beispielsweise durch Anschweißen der Lagerscheibe 200a an der Nabe 84a.

Bei den Doppelkupplungen 10 der Fig. 1 und 2 waren gemäß einer Ausführungsvariante alle Lager als massive Bauteile aus Lagerbronze ausgeführt. Für das Ausführungsbeispiel der Fig. 3 wird vorgeschlagen, alle Lager mit Stahlrücken und darauf aufgebrachter Gleitschicht (z. B. Bronze, Aluminium, Teflon, usw.) auszubilden. In Fig. 4b ist die Gleitschicht der Lagerscheibe 200a mit 208a bezeichnet. Fig. 4b zeigt das Detail E von Fig. 4c.

Regelmäßig ist es vorteilhaft, wenn Lagerbauteile und die benachbarten, von den Lagerbauteilen gelagerten Bauteile der Kupplung das gleiche oder ein ähnliches Wärmeausdehnungsverhalten zeigen, so dass es nicht zu extremen Verspannungen mit nachträglicher Lockerung kommt. Dies ist für die Lagerkomponenten mit Stahlrücken der Fall, wenn die benachbarten Kupplungsteile, hier insbesondere die verschiedenen Naben, aus Stahl hergestellt sind. Durch die gegenüber dem Stahlrücken gesonderte Gleitschicht kann das Gleitverhalten ohne Beeinträchtigung der Stabilität des Gesamtbauteils optimiert werden.

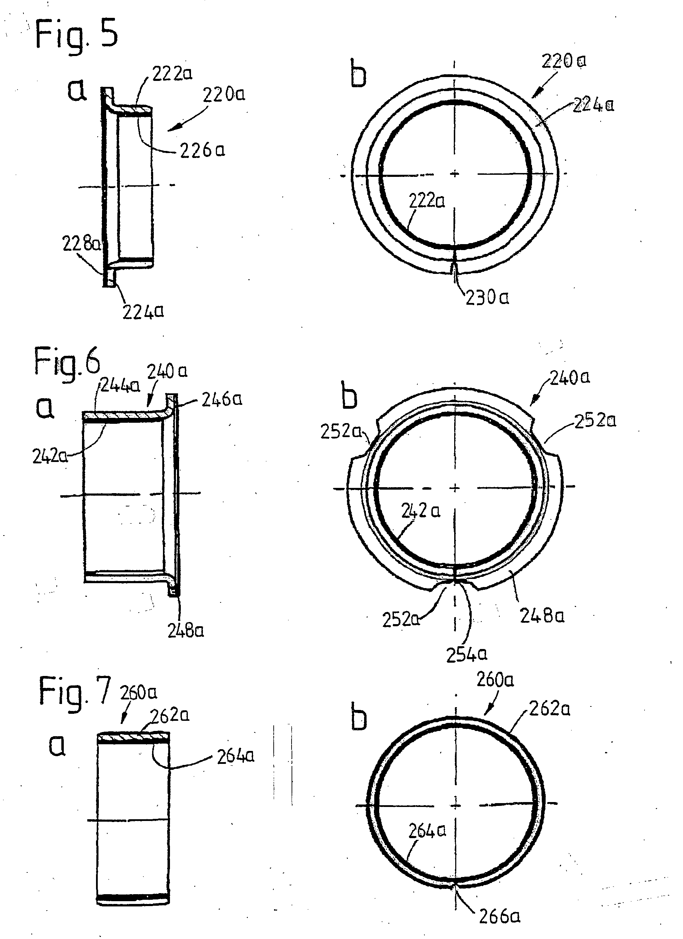

Beim Ausführungsbeispiel der Fig. 3 ist anstelle des Axiallagers 98 und des Radiallagers 100 ein Axial- und Radiallager 99a vorgesehen, das von einer sogenannten Bundbuchse 220a gebildet ist, die in Fig. 5 gezeigt ist. Die Bundbuchse weist einen gegebenenfalls geschlitzten Hülsenabschnitt 222a und einen Flanschabschnitt 224a auf, die jeweils mit einer Gleitschicht 226a beziehungsweise 228a ausgeführt sind. Die jeweilige Gleitschicht ist am Innenumfang des Hülsenabschnitts 22a beziehungsweise an der zur Nabe 80a hin weisenden Stirnfläche des Flanschabschnitts 224a vorgesehen. Ein fertigungsbedingter Schlitz 230a im Hülsenabschnitt und im Flanschabschnitt ist in Fig. 5b zu erkennen. Durch die Integration eines Axiallagers und Radiallagers in einem einzigen Bauteil wird der Montageaufwand reduziert. Ferner kann auch der Bearbeitungsaufwand an den benachbarten Bauteilen reduziert werden. Zur Verbesserung des Gleitverhaltens kann die Bundbuchse mit eingeprägten Ölkanälen oder dergleichen ausgeführt sein. Eine Zufuhr von Öl kann beispielsweise durch die Verzahnung zwischen der Nabe 80a und der Getriebeeingangswelle 22a erfolgen. Um einen Ölkanal vorzusehen, kann man beispielsweise einen oder mehrere Zähne der Verzahnung weglassen.

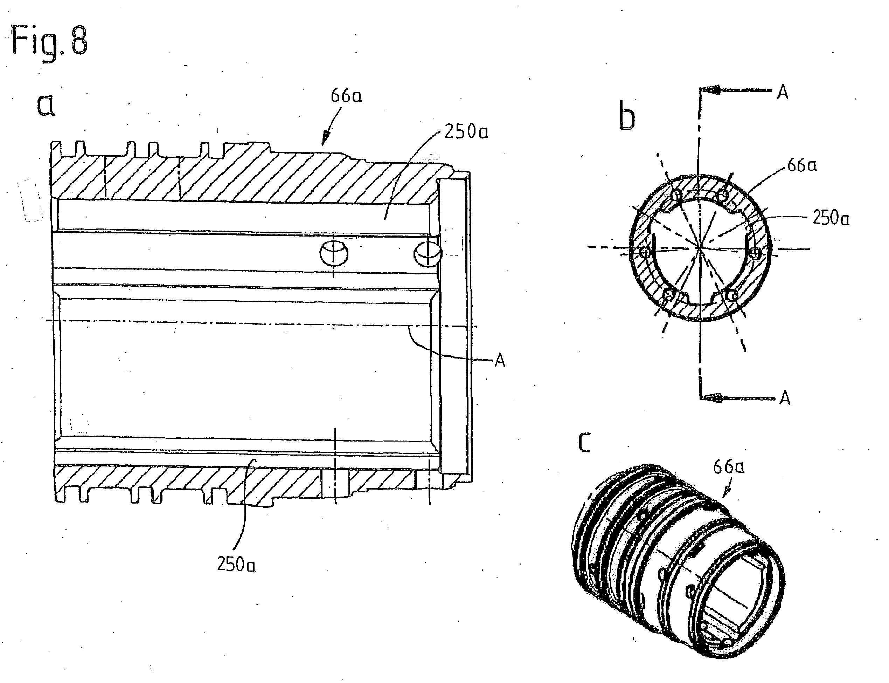

Das Lager 92a ist beim Ausführungsbeispiel der Fig. 3 mit einer Bundbuchse 240a ausgeführt. Ebenso wie die Bundbuchse 220a weist die in Fig. 6 gezeigte Bundbuchse 240a einen Stahlrücken und darauf aufgebrachte Gleitschichten auf. Eine Gleitschicht 242a ist am Innenumfang des Hülsenabschnitts 244a vorgesehen. Eine weitere Gleitschicht 246a ist an der Stirnseite des Flanschabschnitts 248a vorgesehen. Der Außenumfang des Hülsenabschnitts 244a liegt innen am Innenumfang des in Fig. 8 gezeigten Ringteils 66a an. Dieser Innenumfang ist mit Kühlölführungsnuten 250a ausgeführt, die zusammen mit der Außenumfangsfläche des Hülsenabschnitts 244a Kühlölführungskanäle bilden. Zum Durchlassen des Kühlöls ins Innere der Doppelkupplung, zwischen dem Ende des Ringteils 66a einerseits und der Nabe 84a andererseits hindurch, weist der Flanschabschnitt 248a Durchlassaussparungen 252a auf. Die Kühlölzufuhr erfolgt vom Getriebe her entlang dem Außenumfang der in Fig. 7 gezeigten Lagerhülse 260a des Lagers 90a, nämlich durch die schon erwähnten Kühlölführungsnuten 250a. In den verschiedenen Teilfiguren von Fig. 8 (Fig. 8a ist ein Schnitt nach Linie A-A der Fig. 8b) sind verschiedene Bohrungen zu erkennen, die Druckölzuführkanäle und Anschlüsse zu den hydraulischen Nehmerzylindern der beiden Kupplungsanordnungen beziehungsweise Anschlüsse zu einer Druckölversorgung bilden.

Betreffend die Bundbuchse 220a und deren Durchlassaussparungen 252a ist noch darauf hinzuweisen, dass die Durchlassaussparungen 252a vorzugsweise derart dimensioniert sind, dass für einen definierten Rückstau des Kühlöls gesorgt wird. Hierdurch wird eine Ölströmung gegen die Fliehkraft durch die Bohrung 160a zwischen die Welle 24a und 22a unterstützt und somit die Ölversorgung des Lagers 99a verbessert. Eine zusätzliche Unterstützung des Ölflusses zum Lager 99a kann dadurch erfolgen, dass vom Spalt zwischen der Welle 22a und der Welle 24a ausgehend der Ölstrom durch zumindest eine Bohrung in der Nabe 80a an die Lagerstelle 99a gelangen kann. Wie oben schon angedeutet, kann die Lagerstelle 99a alternativ oder zusätzlich auch durch wenigstens einen Durchgang zwischen der Nabe 80a und der Getriebeeingangswelle 22a mit Öl versorgt werden. Hierfür kann für die zwischen der Nabe 80a und der Welle 22a wirksame Koppelgeometrie eine entsprechend gestaltete Profilgeometrie vorgesehen sein, die beispielsweise im Profilgrund genügend freien Querschnitt für eine Längsdurchströmung der Profile von Welle 22a und Nabe 80a vorsieht oder "weggelassene Zähne" im Profil aufweist. Ergänzend empfiehlt es sich dann, den Ölstrom z. B. durch stirnseitig in der Nabe 80a zu der ggf. vorgesehenen Ausgleichsscheibe bzw. zum Sprengring 96a hin vorgesehene Nuten radial nach außen zu führen.

Betreffend die Lagerhülse 260a ist noch zu erwähnen, dass diese vorzugsweise ebenfalls mit Stahlrücken 262a und an dessen Innenumfang vorgesehener Gleitschicht 264a ausgeführt ist. Die Lagerhülse kann, ebenso wie die Bundbuchse 240a geschlitzt ausgeführt sein. In den Fig. 6 und 7 ist jeweils ein herstellungsbedingter Schlitz 254a bzw. 266a zu erkennen.

Durch die Ausführung des eine Axialabstützungsfunktion erfüllenden Lagers 92a mit der Bundbuchse 240a ist die vom Lager bereitgestellte axiale Anlauffläche wesentlich größer als beim Ausführungsbeispiel der Fig. 2. Dementsprechend ist die Belastbarkeit des Lagers durch axiale Kräfte, ggf. Stöße, wesentlich größer. Bei Verwendung einer Bundbuchse mit Stahlrücken und Gleitfläche ergeben sich die schon angesprochenen thermischen Vorteile und ein besonders reibungsarmer Lauf.

Insgesamt sorgt das beim Ausführungsbeispiel der Fig. 3 realisierte Lagerkonzept für eine größere Belastbarkeit und bessere Dauerfestigkeit der verschiedenen Lagerflächen.

Ein nicht unwichtiger Aspekt bei einer Kupplungseinrichtung mit integriertem Betätigungszylinder ist die Abdichtung des Betätigungszylinder-Druckraums, insbesondere die Art und Weise, wie die zwischen dem Kolben und der den Druckraum begrenzenden Zylinderwandung wirksame Abdichtung realisiert ist. Generell können hierfür vorgesehene Dichtungen entweder mit der ggf. vom Außenlamellenträger gebildeten Zylinderwandung oder mit dem Kolben fest verbunden sein und auf den gegenüberliegenden Kolben bzw. der Zylinderwandung (ggf. dem Außenlamellenträger) dichtend gleiten.

Beim diesbezüglichen Dichtungskonzept der Fig. 1 und 2 sind die hierfür vorgesehenen Dichtungen 112 und 134 direkt an dem Außenlamellenträger angebracht, der diese Dichtungen trägt und stabilisiert. Die Dichtungen können beispielsweise auf den jeweiligen Träger aufvulkanisiert sein. Die Dichtungen können auch durch ein Spritzgießverfahren oder Pressverfahren auf den Träger aufgebracht sein.

Derartige Verfahren zum Versehen der Lamellenträger mit den Dichtungen bedingen ein Einspannen des Trägerbauteils in ein Werkzeug, was eine relativ hohe Ausschussquote mit sich bringen kann und die Zahl der in einem Herstellungsdurchgang herstellbaren Dichtungen begrenzt.

Demgegenüber ist bei den Doppelkupplungen der Fig. 3, 10 und 11 ein anderes Dichtungskonzept realisiert, das die Verwendung eines gesonderten Dichtungselementträgers vorsieht.

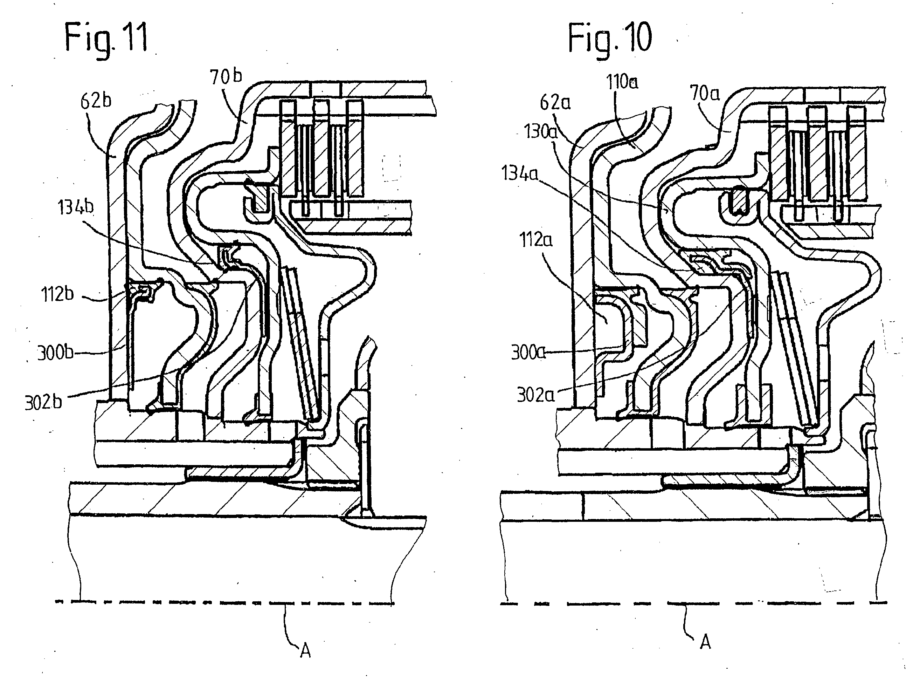

Es wird auf Fig. 3 und Fig. 10 Bezug genommen. Die Abdichtung zwischen dem Außenlamellenträger 62a und dem Betätigungskolben 110a erfolgt mittels eines Dichtungselements 112a, das auf einem gegenüber dem Außenlamellenträger 62a gesonderten Tragelement 300a aufgebracht ist, beispielsweise dem Tragelement 300a aufvulkanisiert oder aufgepresst ist. Das Tragelement kann auch durch Anspritzen oder Umspritzen mit dem Dichtungselement 112a versehen sein. Das Tragelement ist vorteilhaft als scheibenförmiges Blechteil, ggf. Stahlblechteil, ausgeführt und ist vorzugsweise am Außenlamellenträger 62a angebracht, beispielsweise angeschweißt. Eine andere Möglichkeit ist, das Tragelement dem Außenlamellenträger aufzupressen oder mit dem Außenlamellenträger zu verrasten oder zu verclipsen. Da vor dem Anbringen des Tragelements am Außenlamellenträger die vom Tragelement 300a und der Dichtung 112a gebildete Dichtungsanordnung dahingehend überprüft werden kann, ob sie ordnungsgemäß hergestellt wurde und den Spezifikationen entspricht, wird verhindert, dass Lamellenträger mit nicht ordnungsgemäßen Dichtungen produziert werden. Der Ausschuss an Lamellenträgern wird demgemäß deutlich reduziert.

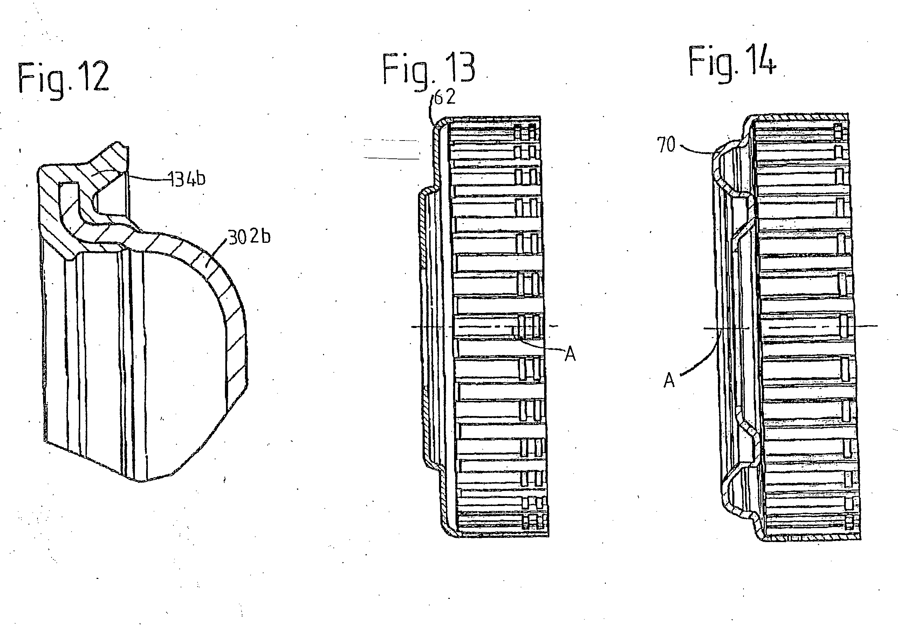

In entsprechender Weise ist die zwischen dem Kolben 130a und dem Außenlamellenträger 70a wirksame Dichtung 134a von einem gegenüber dem Außenlamellenträger 70a gesonderten Tragelement 302a gehalten, das am Außenlamellenträger 70a nachträglich angebracht wurde, nachdem schon das Dichtungselement 134a an das Tragelement 300a angeformt worden ist. Das ebenfalls bevorzugt als scheibenförmiges Blechteil ausgeführte Tragelement 302a kann ebenfalls auf verschiedenste Art und Weise am Außenlamellenträger 70a befestigt sein, beispielsweise angeschweißt, angepresst, verrastet oder verclipst. Hinsichtlich der Ausgestaltung der Tragelemente bestehen grundsätzlich viele Möglichkeiten. Fig. 11 zeigt eine Ausführungsvariante mit anders gestalteten Tragelementen 300b und 302b sowie mit anders gestalteten Dichtungen 312b und 334b. Die von der Dichtung 134b und dem Tragelement 302b gebildete Dichtungsanordnung ist in Fig. 12 detaillierter gezeigt. Fig. 13 und 14 zeigen geeignete Außenlamellenträger für den Aufbau einer erfindungsgemäßen Doppelkupplung. In den Außenlamellenträgern vorgesehene radiale Öldurchlassöffnungen sind in den Fig. 13 und 14 nicht dargestellt.

Wenn die Dichtungen nicht direkt auf dem Außenlamellenträger aufgebracht werden, beispielsweise nicht direkt auf dem Außenlamellenträger aufvulkanisiert werden, sondern die Dichtungen als Einzelbauteile gefertigt werden können, ergeben sich mehrere Vorteile. So wird die Zahl der in einem Herstellungsdurchgang herstellbaren Dichtungsbauteile deutlich erhöht, da keine großen Trägerbauteile in ein Werkzeug eingelegt werden müssen. Ferner wird das Risiko, eine vergleichsweise große Zahl von relativ teueren (großen) Trägerbauteilen durch Ausschuss zu verlieren, reduziert. Wie aus dem Vorstehenden deutlich wurde, kann die Dichtung nach dem hier vorgestellten Dichtungskonzept nachträglich am betreffenden Bauteil, hier dem jeweiligen Außenlamellenträger, angebracht und fixiert werden. Dies kann form-, kraft- oder stoffschlüssig erfolgen. Die Dichtungen können als Verbundbauteile zusammen mit einem jeweiligen Tragelement, beispielsweise einem Stahlträgerblech, gefertigt und dann am zugeordneten Kupplungsbauteil, insbesondere am Außenlamellenträger der inneren Kupplung bzw. am Außenlamellenträger der äußeren Kupplung, angebracht, beispielsweise angeschweißt, werden. Es wurden schon die Alternativbefestigungsmöglichkeiten "Aufpressen" und "Verclipsen" genannt. Man könnte unter Umständen auch daran denken, die Tragelemente am zugeordneten Kupplungsbauteil anzukleben.

Insbesondere dann, wenn die Verbindung zwischen dem Tragelement und dem zugeordneten Kupplungsbauteil nicht umlaufend stoffschlüssig erfolgt, kann eine geeignete Dichtungsgeometrie gewählt werden, die leichte Formabweichungen und Toleranzen ausgleicht und so eine sichere Abdichtung der Druckkammern der Betätigungszylinder gewährleistet.

Es ist noch auf einen Unterschied zwischen den Konstruktionen gemäß Fig. 1 und 2 einerseits und der Konstruktion gemäß Fig. 3 andererseits hinzuweisen: Gemäß Fig. 1 und 2 sind bei der radial äußeren Kupplungsanordnung die am Außenlamellenträger 62 angekoppelten Außenlamellen als belagtragende Lamellen und dementsprechend die am Innenlamellenträger angekoppelten Innenlamellen als belaglose Lamellen ausgeführt, wohingegen bei der radial inneren Kupplungsanordnung die am Außenlamellenträger angekoppelten Außenlamellen als belaglose Lamellen und dementsprechend die am Innenlamellenträger angekoppelten Innenlamellen als belagtragende Lamellen ausgeführt sind. Der genannten Zuordnung der Außenlamellen und Innenlamellen betreffend die radial äußere Kupplungsanordnung liegt die Überlegung zugrunde, dass die belagtragenden Lamellen in der Regel mit Belagnuten ausgeführt sind und zur Unterstützung der Kühlung der radial äußeren Kupplungsanordnung der Eingangsseite der Kupplungseinrichtung zugeordnet sein sollten, so dass sie stets mit dem Motor mitzurotieren (auch im ausgekuppelten Zustand der Kupplungsanordnung), um zur Förderung von Kühlöl durch das Lamellenpaket, insbesondere durch Fliehkrafteinwirkung, zumindest beizutragen.

Demgegenüber sind gemäß der Konstruktion der Fig. 3 sowohl für die radial äußere Kupplungsanordnung 64a als auch für die radial innere Kupplungsanordnung 72a die an der jeweiligen Getriebeeingangswelle, also ausgangsseitig, angekoppelten Innenlamellen als belagtragende Lamellen ausgeführt und die eingangsseitig angeordneten Außenlamellen als belaglose Lamellen ausgeführt. Eine Kühlförderwirkung von in den Lamellenbelägen ausgebildeten Belagnuten kann somit erst auftreten, wenn auch die Innenlamellen mitrotieren. Es hat sich gezeigt, dass trotzdem noch eine hinreichende Kühlwirkung erreicht wird.

Eine für die radial äußere Kupplungsanordnung 64a und die radial innere Kupplungsanordnung 72a identische Zuordnung der belagaufweisenden Lamellen und der belaglosen Lamellen zum Außenlamellenträger 62a bzw. 70a (als Außenlamellen) bzw. zum Innenlamellenträger 82a bzw. 86a (als Innenlamellen) bietet demgegenüber den wesentlichen Vorteil, dass sich beachtliche Kostenersparnisse erzielen lassen. Sind allen belaglosen Lamellen der radial äußeren Kupplungsanordnung axial gleich dicke belaglose Lamellen der radial inneren Kupplungsanordnung zugeordnet, so können die belaglosen Lamellen der radial inneren Kupplungsanordnung gewissermaßen aus dem Verschnitt der belaglosen Lamellen der radial äußeren Kupplungsanordnung hergestellt werden (und umgekehrt). Dies gilt sowohl für Zwischenlamellen (die axial zwischen zwei belagtragenden Lamellen angeordnet sind) als auch für die axialen Endlamellen. Gleiches gilt für die Belagtragelemente der belagtragenden Lamellen und die darauf angebrachten Belege der belagtragenden Lamellen. Es können die Belagtragelemente der radial inneren Kupplungsanordnung aus dem Verschnitt der Belagtragelemente der radial äußeren Kupplungsanordung gefertigt werden (und umgekehrt) und es können die Beläge der radial inneren Kupplungsanordnung aus dem Verschnitt der Beläge der radial äußeren Kupplungsanordnung (und umgekehrt) gefertigt werden. Angemerkt sei, dass die belaglosen Lamellen und die Belagtragelemente regelmäßig aus Stahl hergestellt werden und dass als Beläge in der Regel Papierbeläge verwendet werden.

Ein weiterer Vorteil der Konstruktion der Fig. 3 ist, dass auf die vergleichsweise kostenaufwendigen, nur auf einer axialen Seite mit Belag ausgeführten (relativ dünne) Endlamellen der radial äußeren Kupplungsanordnung gemäß Fig. 1 bzw. Fig. 2 verzichtet ist. Stattdessen ist eine zusätzliche beidseitig mit Belag ausgeführte Belaglamelle vorgesehen, die relativ dünn ist. Insgesamt wird hierdurch vorteilhaft erreicht, dass die Kupplungskonstruktion der Fig. 3 mit einer kürzeren axialen Baulänge ausgeführt werden kann.

Ein weiterer Vorteil der Konstruktion der Fig. 3 ist, dass die ausgangsseitig wirksame Trägheitsmasse (Massenträgheitsmoment) der radial äußeren Kupplungsanordnung 64a gegenüber der entsprechenden Trägheitsmasse im Falle der Konstruktionen der Fig. 1 und 2 reduziert ist, da die größere Trägheitsmasse aufweisenden belaglosen Lamellen nun eingangsseitig angeordnet sind. Die Getriebesynchronisation wird hierdurch entlastet. Die radial äußere Kupplungsanordnung kann beispielsweise den Getriebegängen 1, 3, 5 und Rückwärtsgang zugeordnet sein. Umgekehrt ist das eingangsseitige Trägheitsmoment der radial äußeren Kupplungsanordnung 64a aufgrund der vergleichsweise großen Trägheitsmassen der belaglosen Lamellen gegenüber den Konstruktionen gemäß Fig. 1 und 2 erhöht. Dies ist dann vorteilhaft, wenn zwischen der Kupplungseinrichtung und der Antriebseinheit ein Zwei-Massen-Schwungrad oder ein Torsionsschwingungsdämpfer angeordnet ist, über den der Momentenfluss von der Antriebseinheit zur Kupplungseinrichtung verläuft. In diesem Fall wirkt die eingangsseitige Trägheitsmasse der radial äußeren Kupplungsanordnung 64a zusammen mit der eingangsseitigen Trägheitsmasse der radial inneren Kupplungsanordnung 72a als Sekundärmasse des Zwei-Massen-Schwungrads bzw. des Torsionsschwingungsdämpfers, die in der Regel relativ hoch ausgelegt werden sollte.

## Patentansprüche

1. Doppel- oder Mehrfach-Lamellen-Kupplungseinrichtung für die Anordnung in einem Antriebsstrang eines Kraftfahrzeugs zwischen einer Antriebseinheit und einem Getriebe, wobei die Kupplungseinrichtung (12a) eine Mehrzahl von radial gestaffelt angeordneten, jeweils einer Getriebeeingangswelle (22a bzw. 24a) des Getriebes zugeordnete LamellenKupplungsanordnungen (64a, 72a) aufweist, die jeweils mit einem Lamellenpaket (74a bzw. 76a) ausgeführt sind, welches einem Außenlamellenträger (62a bzw. 70a) zugeordnete Außenlamellen und mit diesen in gegenseitigen Mitnahmeeingriff bringbare, einem Innenlamellenträger (82a bzw. 86a) zugeordnete Innenlamellen aufweist,
wobei jedes Lamellenpaket belagaufweisende und belaglose Lamellen aufweist, die entweder als Außenlamellen oder als Innenlamellen ausgeführt sind,
wobei sowohl die belagaufweisenden Lamellen wenigstens einer radial inneren Lamellen-Kupplungsanordnung (72a) als auch die belagaufweisenden Lamellen wenigstens einer radial äußeren Lamellen-Kupplungsanordnung (64a) beide als Außenlamellen oder - vorzugsweise - als Innenlamellen ausgeführt sind und wobei die belagaufweisenden Lamellen mit Belagtragelementen und auf einer Seite oder - vorzugsweise - auf beiden Seiten daran angebrachten Belägen ausgeführt sind;
**dadurch gekennzeichnet,**
**dass** wenigstens eine, vorzugsweise mehrere der belaglosen Lamellen der radial inneren Kupplungsanordnung (72a) und wenigstens eine, vorzugsweise mehrere der belaglosen Lamellen der radial äußeren Kupplungsanordnung (64a) die gleiche axiale Dicke aufweisen und aus dem gleichen Materialstück gefertigt sind.

2. Kupplungseinrichtung nach Anspruch 1, **dadurch gekennzeichnet,**
**dass** wenigstens eine der folgenden Bedingungen erfüllt ist:
- wenigstens eines, vorzugsweise mehrere der Belagtragelemente der radial inneren Kupplungsanordnung (72a) und wenigstens eines, vorzugsweise mehrere der Belagtragelemente der radial äußeren Kupplungsanordnung (64a) weisen die gleiche axiale Dicke auf und sind aus dem gleichen Materialstück gefertigt;
- wenigstens ein, vorzugsweise mehrere der Beläge der radial inneren Kupplungsanordnung (72a) und wenigstens ein, vorzugsweise mehrere der Beläge der radial äußeren Kupplungsanordnung (64a) weisen die gleiche axiale Dicke auf und sind aus dem gleichen Materialstück gefertigt.

3. Kupplungseinrichtung nach einem der Ansprüche 1 bis 2, **dadurch gekennzeichnet, dass** alle belagaufweisenden Lamellen auf beiden Seiten mit Belag ausgeführt sind.

4. Kupplungseinrichtung nach einem der Ansprüche 1 bis 3, **dadurch gekennzeichnet, dass** die belagaufweisenden Lamellen mit Belagnuten ausgeführt sind.

5. Kupplungseinrichtung nach einem der Ansprüche 1 bis 4, **dadurch gekennzeichnet, dass** das Lamellenpaket (76a) der radial äußeren Kupplungsanordnung (64a) einen Innendurchmesser aufweist, der größer als ein Außendurchmesser des Lamellenpakets (74a) der radial inneren Kupplungsanordnung (72a) ist.

6. Kupplungseinrichtung nach einem der Ansprüche 1 bis 5, **dadurch gekennzeichnet, dass** von den Lamellen wenigstens eines, vorzugsweise aller Lamellenpakete die einer Eingangsseite (34a) der Kupplungseinrichtung zugehörigen Lamellen, die an einer Abtriebswelle (16a) der Antriebseinheit angekoppelt oder ankoppelbar sind, insgesamt ein größeres Massenträgheitsmoment aufweisen als die einer Ausgangsseite (80a bzw. 84a) der Kupplungseinrichtung zugehörigen Lamellen, die an der jeweiligen Getriebeeingangswelle (22a bzw. 24a) angekoppelt oder ankoppelbar sind.

7. Kupplungseinrichtung nach Anspruch 6, **dadurch gekennzeichnet, dass** die Außenlamellen des jeweiligen Lamellenpakets der Eingangsseite (34a) und die Innenlamellen des jeweiligen Lamellenpakets der Ausgangsseite (80a bzw. 84a) zugehörig sind.

8. Verfahren zur Herstellung für eine Kupplungseinrichtung nach einem der vorhergehenden Ansprüche, wobei die Lamellenanordnung umfasst:
- wenigstens eine, vorzugsweise mehrere belaglose erste Lamellen, die einer ersten, radial äußeren Lamellen-Kupplungsanordnung (64a) zugeordnet sind, und wenigstens eine, vorzugsweise mehrere belaglose zweite Lamellen, die einer zweiten, radial inneren Lamellen-Kupplungsanordnung (72a) zugeordnet sind, oder/und
- wenigstens ein, vorzugsweise mehrere erste Belagtragelemente, die einer/der ersten, radial äußeren Lamellen-Kupplungsanordnung (64a) zugeordnet sind, und wenigstens ein, vorzugsweise mehrere zweite Belagtragelemente, die einer/der zweiten, radial inneren Lamellen-Kupplungsanordnung (72a) zugeordnet sind, oder/und
- wenigstens ein, vorzugsweise mehrere erste Beläge, die einer/der ersten, radial äußeren Lamellen-Kupplungsanordnung (64a) zugeordnet und gegebenenfalls auf den ersten Belagtragelementen angebracht sind, und wenigstens ein, vorzugsweise mehrere zweite Beläge, die einer/der zweiten, radial inneren Lamellen-Kupplungsanordnung (72a) zugeordnet sind,
wobei das Verfahren den Schritt des Bereitstellens von Material umfasst, aus dem die Lamellen bzw. die Belagtragelemente bzw. die Beläge geschnitten werden,
**dadurch gekennzeichnet,**
**dass** das Verfahren wenigstens den folgenden Schritt umfasst:
- wenigstens ein für die Bereitstellung einer ersten Lamelle vorgesehener erster Materialstückabschnitt und wenigstens ein für die Bereitstellung einer zweiten Lamelle vorgesehener zweiter Materialstückabschnitt werden in einem Schneidevorgang oder mehreren Schneidevorgängen aus einem gemeinsamen Materialstück geschnitten, wobei im Materialstück der erste Materialstückabschnitt den zweiten Materialstückabschnitt bezogen auf einen innerhalb der Materialstückabschitte liegenden Bezugspunkt radial außen umgibt;

9. Verfahren nach Anspruch 8, **dadurch gekennzeichnet, dass** das Verfahren weiterhin wenigstens einen der folgenden Schritte umfasst:
- wenigstens ein für die Bereitstellung eines ersten Belagtragelements vorgesehener erster Materialstückabschnitt und wenigstens ein für die Bereitstellung eines zweiten Belagtragelements vorgesehener zweiter Materialstückabschnitt werden in einem Schneidevorgang oder mehreren Schneidevorgängen aus einem gemeinsamen Materialstück geschnitten, wobei im Materialstück der erste Materialstückabschnitt den zweiten Materialstückabschnitt bezogen auf einen innerhalb der Materialstückabschnitte liegenden Bezugspunkt radial außen umgibt;
- wenigstens ein für die Bereitstellung eines ersten Belags vorgesehener erster Materialstückabschnitt und wenigstens ein für die Bereitstellung eines zweiten Belags vorgesehener zweiter Materialstückabschnitt werden in einem oder mehreren Schneidevorgängen aus einem gemeinsamen Materialstück geschnitten, wobei im Materialstück der erste Materialstückabschnitt den zweiten Materialstückabschnitt bezogen auf einen innerhalb der Materialstückabschnitte liegenden Bezugspunkt radial außen umgibt.

## Claims

1. Double-plate or multi-plate clutch device for arrangement in a drivetrain of a motor vehicle between a drive unit and a transmission, wherein the clutch device (12a) has a multiplicity of plate-type clutch arrangements (64a, 72a) which are arranged in a radially staggered manner and which are assigned to in each case one transmission input shaft (22a or 24a) of the transmission and which are formed in each case with a plate pack (74a or 76a) which has outer plates assigned to an outer plate carrier (62a or 70a) and inner plates which can be placed in mutual driving engagement with said outer plates and which are assigned to an inner plate carrier (82a or 86a),
wherein each plate pack has plates with lining and plates without lining, said plates being formed either as outer plates or as inner plates,
wherein both the plates with lining of at least one radially inner plate-type clutch arrangement (72a) and also the plates with lining of at least one radially outer plate-type clutch arrangement (64a) are both formed as outer plates or - preferably - as inner plates, and wherein the plates with lining are formed with lining carrying elements and with linings attached to one side or
- preferably - both sides of said lining carrying elements;
**characterized**
**in that** at least one, preferably several of the plates without lining of the radially inner clutch arrangement (72a) and at least one, preferably several of the plates without lining of the radially outer clutch arrangement (64a) have the same axial thickness and are manufactured from the same piece of material.

2. Clutch device according to Claim 1, **characterized in that** at least one of the following conditions is met:
- at least one, preferably several of the lining carrying elements of the radially inner clutch arrangement (72a) and at least one, preferably several of the lining carrying elements of the radially outer clutch arrangement (64a) have the same axial thickness and are manufactured from the same piece of material;
- at least one, preferably several of the linings of the radially inner clutch arrangement (72a) and at least one, preferably several of the linings of the radially outer clutch arrangement (64a) have the same axial thickness and are manufactured from the same piece of material.

3. Clutch device according to either of Claims 1 and 2, **characterized in that** all of the plates with lining are formed with lining on both sides.

4. Clutch device according to one of Claims 1 to 3, **characterized in that** the plates with lining are formed with lining grooves.

5. Clutch device according to one of Claims 1 to 4, **characterized in that** the plate pack (76a) of the radially outer clutch arrangement (64a) has an inner diameter larger than an outer diameter of the plate pack (74a) of the radially inner clutch arrangement (72a).

6. Clutch device according to one of Claims 1 to 5, **characterized in that**, of the plates of at least one, preferably all, of the plate packs, those plates which are associated with an input side (34a) of the clutch device and which are or can be coupled to a drive output shaft (16a) of the drive unit have, overall, a greater mass moment of inertia than those plates which are associated with an output side (80a or 84a) of the clutch device and which are or can be coupled to the respective transmission input shaft (22a or 24a).

7. Clutch device according to Claim 6, **characterized in that** the outer plates of the respective plate pack are associated with the input side (34a) and the inner plates of the respective plate pack are associated with the output side (80a or 84a).

8. Method for producing a clutch device according to one of the preceding claims, wherein the plate arrangement comprises:
- at least one, preferably several first plates without lining which are assigned to a first, radially outer plate-type clutch arrangement (64a), and at least one, preferably several second plates without lining which are assigned to a second, radially inner plate-type clutch arrangement (72a), and/or
- at least one, preferably several first lining carrying elements which are assigned to a/the first, radially outer plate-type clutch arrangement (64a), and at least one, preferably several second lining carrying elements which are assigned to a/the second, radially inner plate-type clutch arrangement (72a), and/or
- at least one, preferably several first linings which are assigned to a/the first, radially outer plate-type clutch arrangement (64a) and which are if appropriate mounted on the first lining carrying elements, and at least one, preferably several second linings which are assigned to a/the second, radially inner plate-type clutch arrangement (72a),
wherein the method comprises the step of providing material from which the plates and/or the lining carrying elements and/or the linings are cut, **characterized**
**in that** the method comprises the following steps:
- at least one first material piece portion provided for the provision of a first plate and at least one second material piece portion provided for the provision of a second plate are cut out of a common piece of material in one cutting process or in multiple cutting processes, wherein, in the material piece, the first material piece portion surrounds the second material piece portion radially at the outside in relation to a reference point situated within the material piece portions.

9. Method according to Claim 8, **characterized in that** the method also comprises at least one of the following steps:
- at least one first material piece portion provided for the provision of a first lining carrying element and at least one second material piece portion provided for the provision of a second lining carrying element are cut out of a comment material piece in one cutting process or in multiple cutting processes, wherein, in the material piece, the first material piece portion surrounds the second material piece portion radially at the outside in relation to a reference point situated within the material piece portions;
- at least one first material piece portion provided for the provision of a first lining and at least one second material piece portion provided for the provision of a second lining are cut out of a comment material piece in one or multiple cutting processes, wherein, in the material piece, the first material piece portion surrounds the second material piece portion radially at the outside in relation to a reference point situated within the material piece portions.

## Revendications

1. Système d'embrayage à doubles disques ou à disques multiples destiné à être agencé dans une chaîne cinématique d'un véhicule automobile entre une unité d'entraînement et une boîte de vitesses, le système d'embrayage (12a) présentant une pluralité d'agencements d'embrayage à disques disposés de manière échelonnée radialement, associés à chaque fois à un arbre d'entrée de boîte de vitesses (22a, respectivement 24a) de la boîte de vitesses, lesquels sont réalisés à chaque fois avec un paquet de disques (74a, respectivement 76a), qui présente des disques externes associés à un support de disques externes (62a, respectivement 70a) et des disques internes pouvant être amenés en engagement d'entraînement mutuel avec ceux-ci et associés à un support de disques internes (82a, respectivement 86a),
chaque paquet de disques présentant des disques avec garniture et sans garniture, qui sont réalisés soit sous forme de disques externes soit sous forme de disques internes,
les disques avec garniture d'au moins un agencement d'embrayage à disques radialement interne (72a) ainsi que les disques avec garniture d'au moins un agencement d'embrayage à disques radialement externe (64a) étant tous réalisés sous forme de disques externes ou - de préférence - sous forme de disques internes et les disques avec garniture étant réalisés avec des éléments de support de garniture et des garnitures montées sur ceux-ci d'un côté ou - de préférence - des deux côtés ;
**caractérisé en ce**
**qu'**au moins un, de préférence plusieurs des disques sans garniture de l'agencement d'embrayage radialement interne (72a) et au moins un, de préférence plusieurs des disques sans garniture de l'agencement d'embrayage radialement externe (64a) présentent la même épaisseur axiale et sont fabriqués en la même pièce de matériau.

2. Système d'embrayage selon la revendication 1, **caractérisé en ce qu'**au moins l'une des conditions suivantes est satisfaite :
- au moins un, de préférence plusieurs des éléments de support de garniture de l'agencement d'embrayage radialement interne (72a) et au moins un, de préférence plusieurs des éléments de support de garniture de l'agencement d'embrayage radialement externe (64a) présentent la même épaisseur axiale et sont fabriqués en la même pièce de matériau ;
- au moins un, de préférence plusieurs des garnitures de l'agencement d'embrayage radialement interne (72a) et au moins une, de préférence plusieurs des garnitures de l'agencement d'embrayage radialement externe (64a) présentent la même épaisseur axiale et sont fabriquées en la même pièce de matériau.

3. Système d'embrayage selon l'une quelconque des revendications 1 à 2, **caractérisé en ce que** tous les disques avec garniture sont réalisés avec une garniture des deux côtés.

4. Système d'embrayage selon l'une quelconque des revendications 1 à 3, **caractérisé en ce que** les disques avec garniture sont réalisés avec des rainures de garniture.

5. Système d'embrayage selon l'une quelconque des revendications 1 à 4, **caractérisé en ce que** le paquet de disques (76a) de l'agencement d'embrayage radialement externe (64a) présente un diamètre interne qui est supérieur à un diamètre externe du paquet de disques (74a) de l'agencement d'embrayage radialement interne (72a).

6. Système d'embrayage selon l'une quelconque des revendications 1 à 5, **caractérisé en ce que** parmi les disques d'au moins un, de préférence de tous les paquets de disques, les disques associés à un côté d'entrée (34a) du système d'embrayage qui sont accouplés ou peuvent être accouplés à un arbre de sortie (16a) de l'unité d'entraînement présentent dans l'ensemble un couple d'inertie de masse supérieur à celui des disques associés à un côté de sortie (80a, respectivement 84a) du système d'embrayage qui sont accouplés ou peuvent être accouplés à l'arbre d'entrée de boîte de vitesses respectif (22a, respectivement 24a).

7. Système d'embrayage selon la revendication 6, **caractérisé en ce que** les disques externes du paquet de disques respectif sont associés au côté d'entrée (34a) et les disques internes du paquet de disques respectif sont associés au côté de sortie (80a, respectivement 84a).

8. Procédé de fabrication d'un système d'embrayage selon l'une quelconque des revendications précédentes, dans lequel l'agencement de disques comprend :
- au moins un, de préférence plusieurs premiers disques sans garniture, qui sont associés à un premier agencement d'embrayage à disques radialement externe (64a), et au moins un, de préférence plusieurs deuxièmes disques sans garniture qui sont associés à un deuxième agencement d'embrayage à disques radialement interne (72a), et/ou
- au moins un, de préférence plusieurs premiers éléments de support de garniture qui sont associés à un/au premier agencement d'embrayage à disques radialement externe (64a), et au moins un, de préférence plusieurs deuxièmes éléments de support de garniture qui sont associés à un/au deuxième agencement d'embrayage à disques radialement interne (72a), et/ou
- au moins une, de préférence plusieurs premières garnitures, qui sont associées à un/au premier agencement d'embrayage à disques radialement externe (64a), et éventuellement sont montées sur les premiers éléments de support de garniture, et au moins une, de préférence plusieurs deuxièmes garnitures, qui sont associées à un/au deuxième agencement d'embrayage à disques radialement interne (72a),
le procédé comprenant l'étape de fourniture de matériau, à partir duquel les disques ou les éléments de support de garniture ou les garnitures sont découpés,
**caractérisé en ce que**
le procédé comprend au moins l'étape suivante :
- au moins une première portion de pièce de matériau prévue pour fournir un premier disque et au moins une deuxième portion de pièce de matériau prévue pour fournir un deuxième disque sont découpées dans une opération de découpage ou dans plusieurs opérations de découpage à partir d'une pièce de matériau commune, dans la pièce de matériau, la première portion de pièce de matériau entourant radialement à l'extérieur la deuxième portion de pièce de matériau par rapport à un point de référence situé à l'intérieur des portions de pièce de matériau.

9. Procédé selon la revendication 8, **caractérisé en ce que** le procédé comprend en outre au moins l'une des étapes suivantes :
- au moins une première portion de pièce de matériau prévue pour fournir un premier élément de support de garniture et au moins une deuxième portion de pièce de matériau prévue pour fournir un deuxième élément de support de garniture sont découpées dans une opération de découpage ou dans plusieurs opérations de découpage à partir d'une pièce de matériau commune, dans la pièce de matériau, la première portion de pièce de matériau entourant radialement à l'extérieur la deuxième portion de pièce de matériau par rapport à un point de référence situé à l'intérieur des portions de pièce de matériau ;
- au moins une première portion de pièce de matériau prévue pour fournir une première garniture et au moins une deuxième portion de pièce de matériau prévue pour fournir une deuxième garniture sont découpées dans une ou plusieurs opérations de découpage à partir d'une pièce de matériau commune, dans la pièce de matériau, la première portion de pièce de matériau entourant radialement à l'extérieur la deuxième portion de pièce de matériau par rapport à un point de référence situé à l'intérieur des portions de pièce de matériau.
